# EUROPEAN PATENT APPLICATION

(11) **EP 3 486 762 A1**
(43) Date of publication of application: **22.05.2019**
(21) Application number: 18205910.5
(22) Date of filing: 13.11.2018
(51) Int. Cl.: G06F 3/0484

(54) **MOBILE DATA SNAPSHOTS**

(30) Priority: 15.11.2017 US 201762586463 P; 24.09.2018 US 201816140114
(71) Applicant: Rockwell Automation Technologies, Inc., Mayfield Heights, OH 44124 (US)
(72) Inventor: PLACHE, Kenneth S., Mayfield Heights, OH Ohio 44124 (US); REISSNER, Kyle K., Mayfield Heights, OH Ohio 44124 (US); OHLSEN, Michael J., Mayfield Heights, OH Ohio 44124 (US)
(74) Representative: Grünecker Patent- und Rechtsanwälte PartG mbB

(57) **Abstract**

Techniques to facilitate data snapshots for an application associated with an industrial automation environment are disclosed herein. In at least one implementation, device data generated by at least one industrial device operating in the industrial automation environment is received, and a visualization of the device data is presented for display by the computing system. A selection by a user of the computing system of at least a portion of the device data to capture as a data snapshot is received, and the data snapshot is captured and shared with at least a second user.

## Description

### RELATED APPLICATIONS

This application claims the benefit of, and priority to, U.S. Provisional Patent Application No. 62/586,463, entitled "MOBILE DATA SNAPSHOTS" filed November 15, 2017, which is hereby incorporated by reference in its entirety for all purposes.

### TECHNICAL FIELD

Aspects of the disclosure are related to computing hardware and software technology.

### TECHNICAL BACKGROUND

Software applications that run on computing systems commonly provide some type of user client interface to present information to the user and receive user inputs. In a typical client-server architecture, an application running on a client computing system receives data transmitted from a server over a communication network for display to the user on the user client interface.

Industrial automation environments utilize machines and other devices during the industrial manufacturing process. These machines typically have various moving parts and other components that continually produce operational data over time, such as pressure, temperature, speed, and other metrics. Reviewing and monitoring this operational data is of high importance to those involved in operating an industrial enterprise.

In some cases, the operational data may be provided for display on a variety of systems and devices, such as notebook or tablet computers running standalone applications, web browsers, and the like, in order to present the information to the user. For example, a tablet computer could receive a constant stream of the operational data over a network and display this information dynamically, such as by providing live tiles, icons, charts, trends, and other graphical representations which continually receive updated operational data from external data sources, which are typically located in the industrial automation environment.

### OVERVIEW

Provided herein are techniques to facilitate data snapshots for an application associated with an industrial automation environment. In at least one implementation, a computing system receives device data generated by at least one industrial device operating in the industrial automation environment. A visualization of the device data is presented for display by the computing system. The computing system receives a selection by a user of the computing system of at least a portion of the device data to capture as a data snapshot, and the data snapshot is captured and shared with at least a second user.

This Overview is provided to introduce a selection of concepts in a simplified form that are further described below in the Detailed Description. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 is a block diagram that illustrates a communication system in an exemplary implementation.
Figure 2 is a block diagram that illustrates a process flow in an exemplary embodiment.
Figure 3 is a sequence diagram that illustrates an operation of a communication system in an exemplary embodiment.
Figure 4 is a block diagram that illustrates an operational scenario of an application displayed on a mobile device in an exemplary implementation.
Figure 5 is a block diagram that illustrates an operational scenario of an application displayed on a mobile device in an exemplary implementation.
Figure 6 is a block diagram that illustrates an operational scenario involving a computing system in an industrial automation environment in an exemplary implementation.
Figure 7 is a block diagram that illustrates a computing system in an exemplary implementation.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

In traditional mobile applications for industrial operations, access to plant floor data is typically limited to either data that is configured to be uploaded to a cloud network and is thereby accessible from any device connected to the Internet, or device data that is only accessible when connected to a local on-premise plant floor network. In the case of data that is only accessible on the plant floor network, mechanisms to share the plant floor data with other users, both within the plant network or outside of it, are often limited to screenshots sent via short message service (SMS) text messages or email. However, these screen capture mechanisms are not typically integrated into the industrial mobile application itself, thus causing an inefficient workflow for the user by requiring frequent switching between applications. Further, these separate, third party screen capture mechanisms often require the user to be connected to both the plant floor network and the Internet, which is not a prevalent network topology.

Implementations disclosed herein provide a system for viewing, capturing, and sharing plant floor data in a mobile application. In at least one implementation, the mobile application retrieves device data from plant floor devices on demand, by request, periodically, based on data changes, or any other triggering mechanism, including combinations thereof. Some examples of industrial devices that may provide the device data to the mobile application include industrial control systems such as industrial controllers and programmable logic controllers (PLCs), motion control products such as servo drives, servo motors, and actuators, encoders that electronically monitor positions of rotating components, and any other machine, component, or device that may be utilized in industrial operations. Upon receipt of the device data from one or more devices, the mobile application may provide visualizations for the data, such as trends, tables, gauges, charts, meters, and any other graphical representations of data values. The plant data may be stored on the mobile device in memory or local storage, or on a database in the plant network, in a cloud network, or any location and/or storage system. The mobile application provides a mechanism for the user to capture a snapshot of the current data and/or its associated visualization, such as a picture of the data visualization, a data table, minimum and maximum data ranges, values, metrics, trends, tables, gauges, charts, meters, or any other manner of expressing and/or visualizing the data. Once the data is captured, the mobile application further provides a mechanism to share the captured data with other users, such as team members. For example, the user could send the captured data to another team member in a chat function of the application, or post the captured data snapshot to a team message board. In this manner, the other team members are able to view and interact with the captured data, regardless of whether they have access to the plant floor device or devices that originally provided the data.

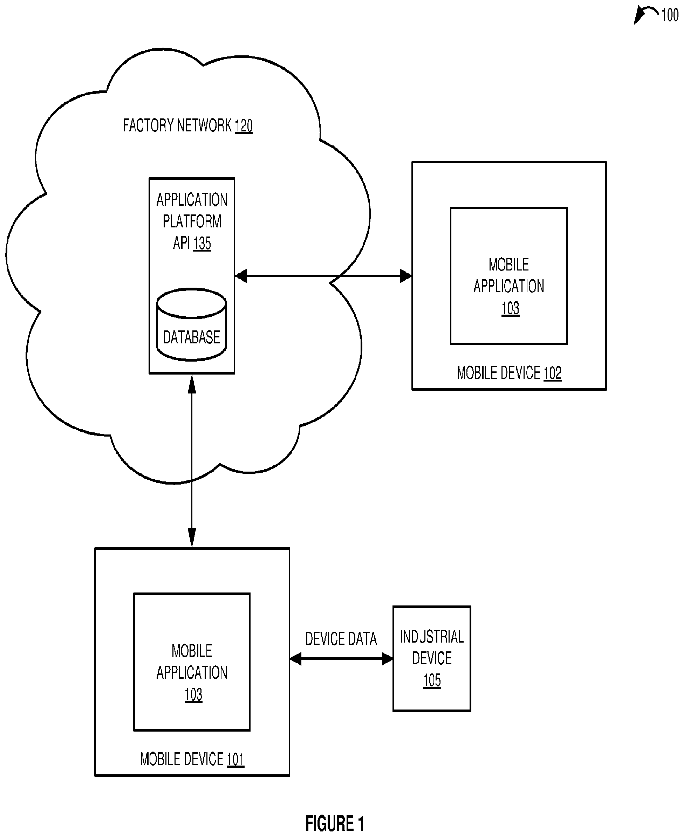

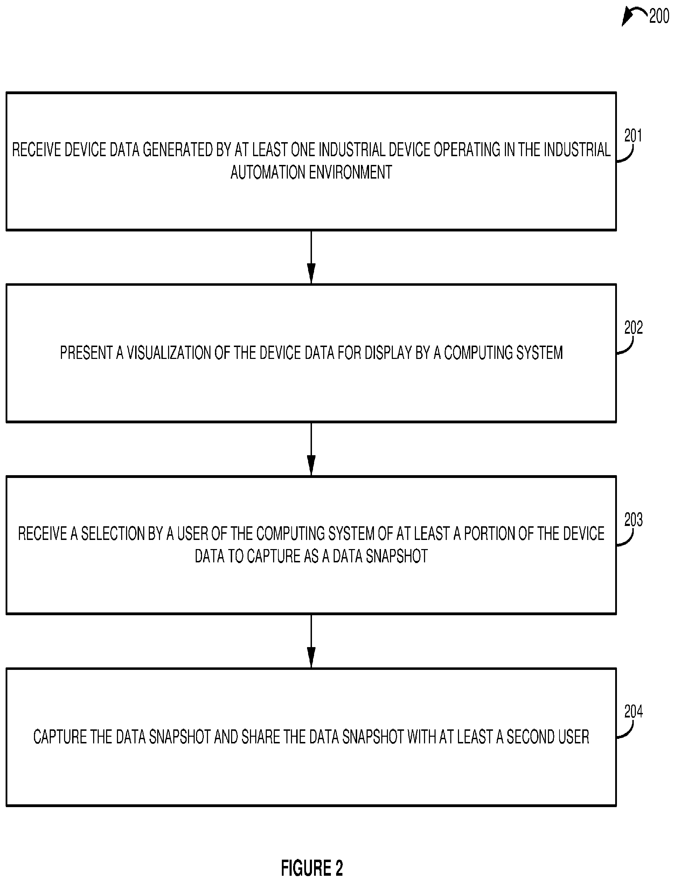

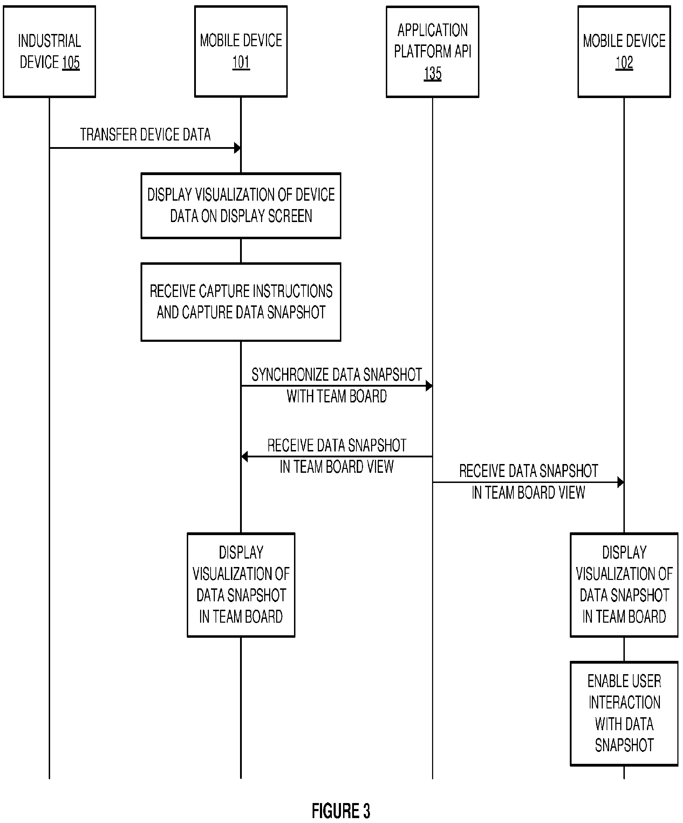

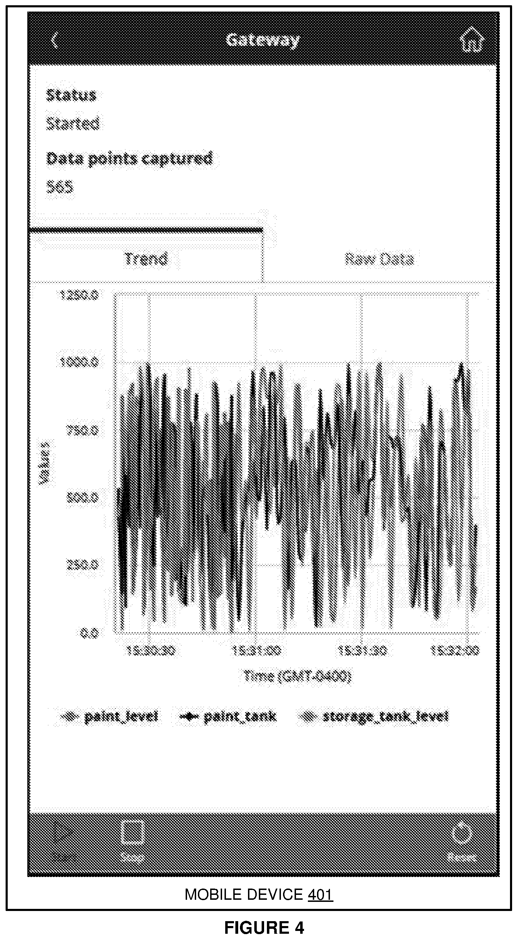

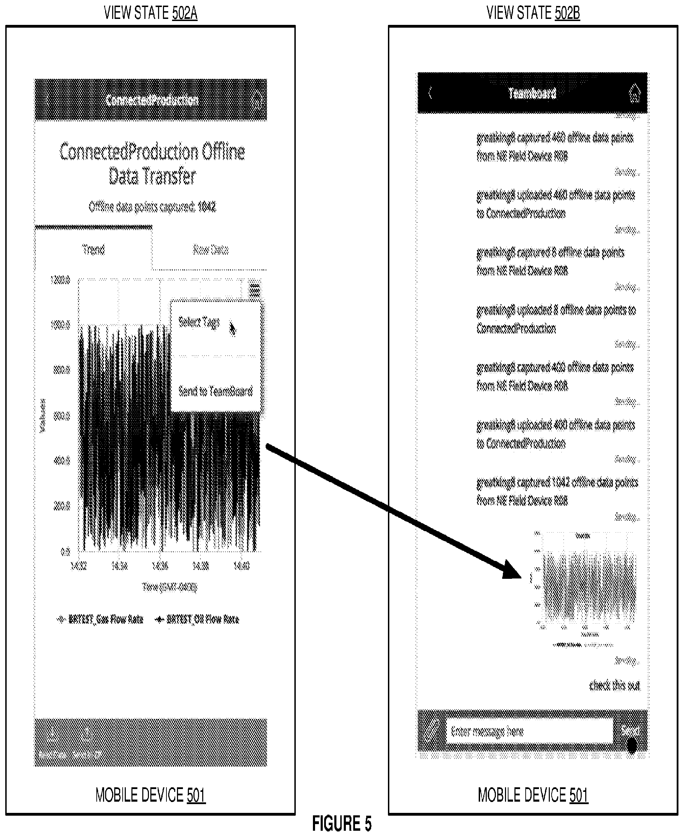

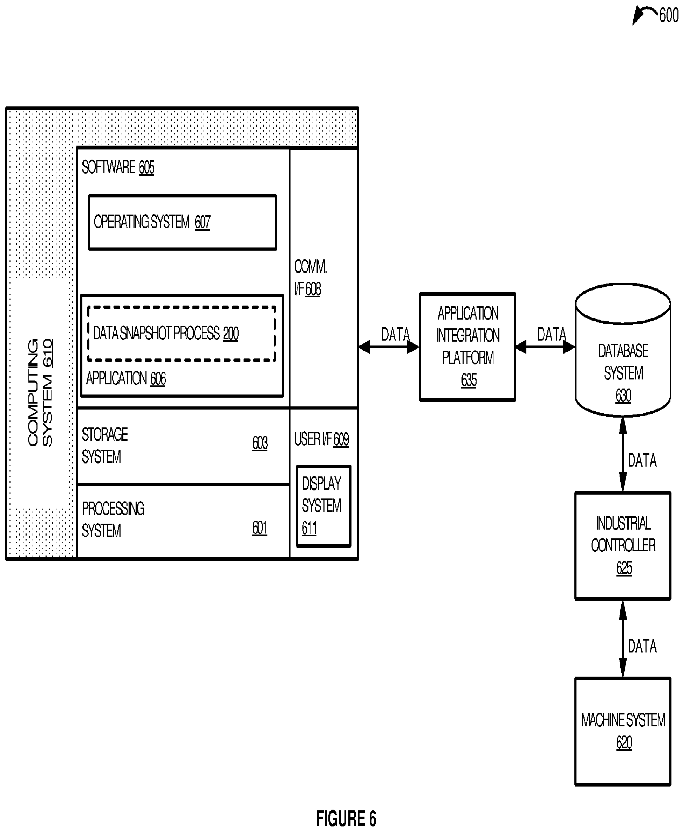

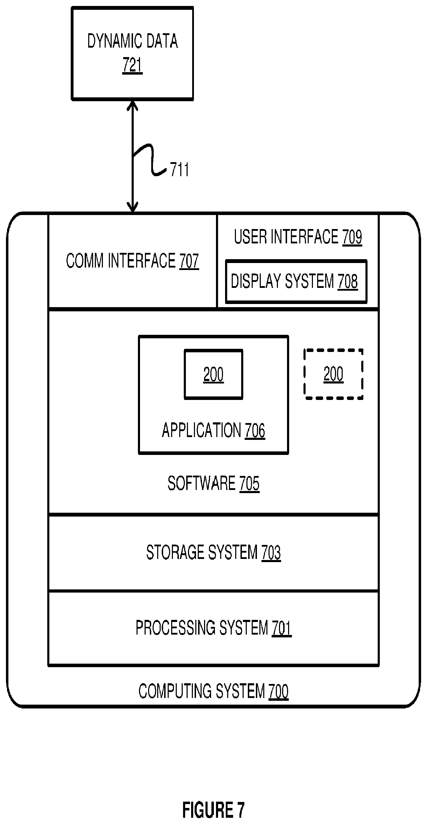

Referring now to the drawings, Figure 1 illustrates a communication system of an industrial automation environment in an exemplary implementation. Figure 2 illustrates a process flow in an exemplary embodiment, while Figure 3 is a sequence diagram that illustrates an operation of a communication system in an exemplary embodiment. Figures 4 and 5 illustrate exemplary graphical user interfaces of an application executing on a mobile device capable of receiving device data and capturing and sharing the device data with users of other computing systems. Figure 6 illustrates an exemplary industrial automation environment that includes a computing system that may be used to execute a data snapshot process, and Figure 7 illustrates an exemplary computing system that may be used to perform any of the data snapshots processes and operational scenarios described herein.

Turning now to Figure 1, a communication system 100 of an industrial automation environment is illustrated. Communication system 100 provides an example of a communication system that may be used to implement a data snapshot process 200 to facilitate data snapshots for an application associated with an industrial automation environment as described herein. Communication system 100 includes mobile devices 101 and 102, industrial device 105, and factory network 120. Mobile devices 101 and 102 include mobile application 103 installed thereon. In this example, mobile application 103 comprises an automation mobile application for use on a mobile device such as a smartphone, tablet, or laptop. Factory network 120 includes application platform application programming interface (API) server 135. Application platform API server 135 includes databases that store data that may be shared by a team of users of mobile application 103, among other data. Note that factory network 120 could comprise an on-premise manufacturing network, such as a local communication network on the plant floor, a cloud-based communication network, or some other network or service, including combinations thereof. In some examples, mobile application 103 could comprise a FactoryTalk® TeamONE mobile application provided by Rockwell Automation, Inc.

In operation, mobile application 103 executes on mobile device 101 to perform various functions, which could include sending API calls over a hypertext transfer protocol secure (HTTPS) connection to application platform API server 135 for storing or retrieving data in the database. Mobile application 103 also directs mobile device 101 to communicate with factory devices, such as industrial controllers, machines, drives, motors, or some other industrial automation equipment. In this example, mobile application 103 directs mobile device 101 to retrieve device data from industrial device 105. The device data can be transmitted to the mobile application 103 running on mobile device 101 using any communication protocol, such as common industrial protocol (CIP), digital signal interface (DSI), DPI, digital addressable lighting interface (DALI), open platform communications (OPC) unified architecture (UA), hypertext transfer protocol (HTTP), representational state transfer (REST), socket.IO, and any other device communication protocol, including combinations thereof. Once the device data is retrieved from industrial device 105, visualizations for the device data could be generated and displayed by mobile application 103 on mobile device 101, such as trends, charts, graphs, gauges, meters, data tables, and other graphical data visualizations. The retrieved device data and any visualizations generated may also be stored within a memory system of mobile device 101, and may be transmitted to the database of the factory platform API 135 or some other remote data storage system in some examples.

Mobile application 103 provides a mechanism to capture device data snapshots and share those snapshots with other users. For example, a user of mobile device 101 may provide a selection of at least a portion of the device data to capture as a data snapshot. The selection of the device data to capture could be received by mobile application 103 as a particular visualization or visualizations of the device data, such as a particular chart or gauge, or could be a selection of a picture, data table, a minimum and maximum data range, trend, alarm, data log, historical log, or any other indication of the device data received from industrial device 105. The captured data snapshot may also include more data than just the viewable portion on the display or within a particular visualization presented on mobile device 101. For example, the captured data snapshot could include all of the data received from industrial device 105, not just what is visible on the screen at the time the data capture request is received from the user. In at least one implementation, mobile application 103 captures the selected data and stores the captured data on mobile device 101 until it can be automatically synchronized with a database in the factory network 120 or other users or team members with which the captured data is shared.

In some examples, in addition to selecting the device data for capture, a user of mobile device 101 may also provide an indication of which user or users to share the captured data with, and may also select the communication format for sharing the data. For example, the user of mobile device 101 may open a chat dialog using mobile application 103 with another user operating mobile device 102, and select to share captured device data snapshots with the user during the chat session. In another example, the user of mobile device 101 could use mobile application 103 to post captured device data snapshots to a team board or some other data repository where other team members could access and interact with the captured data. The captured data would be accessible to any users that the data has been shared with, even if those users do not have access or are not connected to the industrial device 105 that initially provided the device data. For example, as shown in Figure 1, mobile device 102 is not in communication with industrial device 105, but a user could still operate mobile device 102 to view and interact with captured data shared with mobile device 102 that was initially received as device data from industrial device 105. In some implementations, the team member viewing the shared data snapshot is only permitted to view a read-only "picture" of the captured data. However, the team member viewing the shared data snapshot on mobile device 102 may be granted permissions to interact with the data visualization in the same manner as the original user who captured the data on mobile device 101. For example, the user viewing the data may be permitted to turn pens on or off, use tooltips for data points, zoom, pan, scroll, perform data analytics functions, and execute any other functions when interacting with the captured data snapshots. Mobile application 103 can also provide the ability for users to manage or synchronize the captured data snapshots so that team members outside of the plant network 120 can view and/or interact with the data. For example, a user of mobile device 101 can utilize mobile application 103 to share captured data snapshots with other users who are not connected to plant network 120 by uploading the data to a cloud service or some other data network system accessible outside of plant network 120.

Advantageously, mobile application 103 provides the capability to capture device data snapshots and share those snapshots with other users of the mobile application 103. This ability to capture and share data snapshots within the mobile application 103 provides a novel and useful mechanism for sharing device data between team members. Further, mobile application 103 enables users who receive access to the shared data snapshots to interact with the captured data in the same manner as the user who originally captured it, providing much greater functionality and utility than simply sharing a static screenshot image. In this manner, users can capture snapshots of device data received from factory devices and share the data snapshots among team members using mobile application 103. Exemplary operations of communication system 100 to facilitate data snapshots for a mobile application 103 associated with an industrial automation environment will now be discussed with respect to Figures 2 and 3.

Figure 2 is a flow diagram that illustrates an operation of mobile device 101 in an exemplary implementation. The operation 200 shown in Figure 2 may also be referred to as data snapshot process 200 herein. The steps of the operation are indicated below parenthetically. The following discussion of operation 200 will proceed with reference to elements of communication system 100 of Figure 1 in order to illustrate its operations, but note that the details provided in Figure 1 are merely exemplary and not intended to limit the scope of process 200 to the specific implementation of Figure 1.

Operation 200 may be employed by mobile device 101 to facilitate data snapshots for a mobile application 103 associated with an industrial automation environment. As shown in the operational flow of Figure 2, mobile device 101 receives device data generated by at least one industrial device 105 operating in the industrial automation environment (201). In some examples, the device data may be received by mobile device 101 executing mobile application 103 to interface with industrial device 105 and receive the data. In order to interface with industrial device 105, mobile application 103 may utilize a data retrieval configuration, which could include communication protocols that may be used by mobile device 101 to communicate with particular industrial devices and receive industrial data. For example, the device data could be transmitted to mobile application 103 running on mobile device 101 using any communication protocol, such as CIP, DSI, DPI, DALI, OPC UA, HTTP, REST, socket.IO, or any other device communication protocol, including combinations thereof. In some implementations, mobile device 101 could receive the device data generated by industrial asset 105 from some other system in communication with industrial device 105, such as application platform API server 135.

A visualization of the device data is presented for display by mobile device 101 (202). In at least one implementation, the visualization of the device data could be generated and displayed by mobile application 103 on mobile device 101, such as trends, charts, graphs, gauges, meters, data tables, and other graphical data visualizations. However, in some implementations, the visualization of the device data may be received by mobile device 101 as part of the device data. For example, application platform API server 135 could generate visualizations of the device data generated by industrial device 105, and provide the device data and the generated visualizations to mobile device 101 for display within mobile application 103. The retrieved device data and any visualizations generated may also be stored within a memory system of mobile device 101, and may be transmitted to the database of the application platform API 135 or some other remote data storage system in some examples.

Mobile device 101 receives a selection by a user of mobile device 101 of at least a portion of the device data to capture as a data snapshot (203). In some implementations, mobile application 103 may provide a mechanism for a user of mobile device 101 to provide a selection of at least a portion of the device data to capture as a data snapshot. The selection of the device data to capture could be received by mobile application 103 as a particular visualization or visualizations of the device data, such as a particular chart or gauge, or could be a selection of a picture, data table, a minimum and maximum data range, trend, alarm, data log, historical log, or any other indication of the device data generated by industrial device 105. The captured data snapshot may also include more data than just the viewable portion on the display or within a particular visualization presented on mobile device 101. For example, the captured data snapshot could include all of the data received from industrial device 105, not just what is visible on the display screen at the time the data capture request is received from the user. In at least one implementation, the user may select a smaller portion of the device data to capture as a data snapshot. For example, mobile application 103 may provide a mechanism for the user to draw a selection box around a smaller section of the visualization of the device data than the total amount of data displayed in the visualization, or otherwise identify just a portion of the device data to capture as the data snapshot. Other techniques of receiving a selection by a user of mobile device 101 to identify at least a portion of the device data to capture as the data snapshot are possible and within the scope of this disclosure.

Mobile device 101 captures the data snapshot and shares the data snapshot with at least a second user (204). In some implementations, mobile application 103 may process the selection from the user that identifies at least a portion of the device data to capture as the data snapshot to determine the specific data snapshot to capture. In at least one implementation, mobile device 101 may capture the data snapshot and share the data snapshot with at least the second user by storing the data snapshot locally and automatically synchronizing the data snapshot with at least the second user. For example, mobile application 103 could capture the selected device data as the data snapshot and store the captured data snapshot locally on mobile device 101. Mobile application 103 may be further configured to automatically synchronize the captured data snapshot with at least the second user, application platform API server 135, a database in the factory network 120, or other specific users or team members with which the captured data is shared. In some examples, in addition to selecting the device data for capture, the user of mobile device 101 may also provide an indication of which user or users to share the captured data with, and may also select the communication format for sharing the data. In some implementations, mobile device 101 may share the data snapshot with at least the second user by transferring the data snapshot for delivery to a second computing system operated by the second user. For example, the user of mobile device 101 may open a chat dialog using mobile application 103 with a second user operating mobile device 102, and select to share captured device data snapshots directly with the second user during the chat session. In at least one implementation, mobile device 101 may share the data snapshot with at least the second user by posting the data snapshot to a team board accessible by the second user. For example, the user of mobile device 101 could use mobile application 103 to post captured device data snapshots to a team board or some other data repository where other team members could access and interact with the captured data. The captured data would be accessible to any users that the data has been shared with, even if those users do not have access or are not connected to the industrial device 105 that initially provided the device data. For example, in some implementations the second user with whom the data snapshot is shared does not have access to at least the one industrial device 105 from which the device data is received, but can still access and interact with the device data shared with the second user in the data snapshot.

In some implementations, the team member viewing the shared data snapshot is only permitted to view a read-only "picture" or static graphical screenshot of the captured data. However, the team member viewing the shared data snapshot on mobile device 102 may be granted permissions to interact with the data visualization in the same manner as the original user who captured the data on mobile device 101. For example, the data snapshot shared with at least the second user may enable the second user to interact with at least the portion of the device data captured as the data snapshot, such as by enabling the second user to perform data analytics functions on at least the portion of the device data captured as the data snapshot. In some examples, the user viewing the data may be permitted to turn pens on or off, use tooltips for data points, zoom, pan, scroll, perform data analytics functions, and execute any other functions when interacting with the captured data snapshots. Mobile application 103 can also provide the ability for users to manage or synchronize the captured data snapshots so that team members outside of the factory network 120 can view and/or interact with the data. For example, a user of mobile device 101 can utilize mobile application 103 to share captured data snapshots with other users who are not connected to factory network 120 by uploading the data to a cloud service or some other data network system accessible outside of network 120.

Advantageously, mobile application 103 provides the capability to capture device data snapshots and share those snapshots with other users of mobile application 103, enabling those users to interact with the captured device data. This ability to capture and share data snapshots within mobile application 103 provides a novel and useful mechanism for sharing device data between team members. Further, mobile application 103 may enable users to interact with the captured data in the same manner as the user who originally captured it, providing much greater functionality and utility than simply sharing a static screenshot image. In this manner, users can capture snapshots of device data received from industrial devices and share interactive data snapshots among team members using mobile application 103. Another exemplary operation of communication system 100 to facilitate data snapshots for a mobile application 103 associated with an industrial automation environment will now be discussed with respect to Figure 3.

Figure 3 is a sequence diagram that illustrates an operation of communication system 100 in an exemplary implementation. In this example, industrial device 105 transfers device data for delivery to mobile device 101. In some examples, the device data may be transferred by industrial device 105 responsive to a request by mobile application 103 to retrieve the device data from industrial device 105, or could be transferred automatically to mobile device 101, such as on a periodic basis, scheduled delivery times, or responsive to certain data events or other triggers.

Once the device data is transferred by industrial device 105, visualizations for the device data are generated and displayed by mobile application 103 on a display screen of mobile device 101. The visualizations could include any graphical representations of the device data, such as trends, charts, graphs, gauges, meters, data tables, and other graphical data visualizations. In some implementations, instead of being generated by mobile application 103 and/or mobile device 101, at least some of the visualizations may be transferred by industrial device 105 or some other data server system as part of the device data received by mobile device 101. The retrieved device data and any visualizations generated may also be stored within a memory system of mobile device 101 in some examples.

Mobile application 103 receives capture instructions to capture a data snapshot of the device data and responsively captures the specified data snapshot. Mobile application 103 provides a mechanism to capture device data snapshots and share those snapshots with other users. For example, a user of mobile device 101 may provide a selection of at least a portion of the device data to capture as the data snapshot. The capture instructions could be received by mobile application 103 as a selection on a visualization of the device data, such as a chart, gauge, picture, data table, a minimum and maximum data range, trend, alarm, data log, historical log, or any other graphical representation of the device data received from industrial device 105. The captured data snapshot may also include more data than just the viewable portion on the display or within a particular visualization presented on mobile device 101. For example, the captured data snapshot could include all of the data received from industrial device 105, not just what is visible on the screen at the time the data capture request is received from the user. In at least one implementation, mobile application 103 captures the selected data and stores the captured data on mobile device 101, and may further transmit the data snapshot to the database of the factory platform API 135 or some other remote data storage system in some examples.

Upon capturing the data snapshot, mobile application 103 automatically synchronizes the data snapshot with a team board provided by factory platform API 135 or some other database in the factory network 120 that allows for sharing of data snapshots among team members. For example, the user of mobile device 101 could use mobile application 103 to post the captured data snapshot to a team board or some other data repository where other team members could access and interact with the captured data. The captured data would be accessible to any users that the data has been shared with, even if those users do not have access or are not connected to the industrial device 105 that initially provided the device data.

As discussed above, in this example the captured data snapshot visualizations are displayed in a team board feature of mobile application 103 where members of a team can post and share data snapshots of device data received from devices operating on a factory floor such as industrial device 105. The users of mobile devices 101 and 102 would then be able to view the data snapshot when accessing the team board. In some implementations, the team members viewing the shared data snapshot may only be permitted to view a read-only "picture" of the captured data. However, in this example, the team member viewing the shared data snapshot on mobile device 102 is granted permissions to interact with the data visualization in the same manner as the original user who captured the data on mobile device 101. For example, the user viewing the data may be permitted to turn pens on or off, use tooltips for data points, zoom, pan, scroll, perform data analytics functions, and execute any other functions when interacting with the captured data snapshots. Mobile application 103 can also provide the ability for users to manage or synchronize the captured data snapshots so that team members outside of the plant network 120 can view and/or interact with the data. For example, a user of mobile device 101 can utilize mobile application 103 to share captured data snapshots with other users who are not connected to plant network 120 by uploading the data to a cloud service or some other data network system accessible outside of plant network 120.

Beneficially, mobile application 103 provides the ability to capture device data snapshots and share those snapshots with other users of the mobile application 103, thereby providing a useful mechanism for sharing device data between team members. Further, mobile application 103 enables users who receive access to the shared data snapshots to interact with the captured data in the same manner as the user who originally captured it, providing much greater functionality and utility than simply sharing a static screenshot image. Some example graphical user interface displays provided by an automation mobile application that illustrate exemplary visualizations of device data retrieved, captured, and shared utilizing the data snapshots techniques disclosed herein will now be discussed with respect to Figures 4 and 5.

Figure 4 is a block diagram that illustrates a display screen of an application executing on mobile device 401 in an exemplary implementation. In this example, the application comprises an automation mobile application for use on a mobile device such as a smartphone, tablet, or laptop. Mobile device 401 provides an example of mobile device 101, although device 101 could use alternative configurations. The display of the mobile application on mobile device 401 provides a visualization of device data retrieved from a paint tank and a storage tank. In particular, the visualization includes a trend diagram indicating the paint level, paint tank, and the storage tank level over time. The data presented also includes the device status and the number of data points captured. The user is also able to select a tab to view the raw data, which is not shown in Figure 4 for clarity. An exemplary representation of a user selecting device data to capture and share as a data snapshot will now be described with respect to Figure 5.

Figure 5 is a block diagram that illustrates a mobile application displayed on mobile device 501 in an exemplary implementation. In this example, the application comprises an automation mobile application for use on a mobile device such as a smartphone, tablet, or laptop. Mobile device 501 provides an example of mobile device 101, although device 101 could use alternative configurations. The following example could be executed by mobile device 101 and other elements of communication system 100 in some implementations.

As shown in view state 502A, the user is presented with an interface of the mobile application for offline data transfer. The user is viewing a trend diagram displaying the gas flow rate and oil flow rate over time. A dropdown menu is presented which provides the user the option to select data tags for capture, or to send the entire trend diagram to the team board. In this example, the user selects the option to send the trend to the team board, the effect of which is shown in view state 502B.

View state 502B shows a team board displayed on mobile device 501. The team board is used to post messages and other data to the team members who utilize the mobile application. As shown on the team board, the user has captured and uploaded offline data points for several different plant devices. At the bottom of the user interface shown in view state 502B, the trend diagram that the user selected to send to the team board as shown and described above with respect to view state 502A now appears in the list of captured data points on the team board of view state 502B. Beneficially, any members of the team that have access to the team board can now view and interact with the trend diagram that the user posted. In this manner, the mobile application provides the ability to capture device data snapshots such as the trend diagram shown in view state 502A and share those snapshots with other users of the mobile application as shown in view state 502B of Figure 5.

Now referring back to Figure 1, mobile devices 101 and 102 each individually comprise a processing system and communication transceiver. Mobile devices 101 and 102 may also include other components such as a user interface, data storage system, and power supply. Mobile devices 101 and 102 may individually reside in single devices or may each be distributed across multiple devices. Examples of mobile devices 101 and 102 include mobile computing devices, such as cell phones, tablet computers, laptop computers, notebook computers, and gaming devices, as well as any other type of mobile computing devices and any combination or variation thereof. Examples of mobile devices 101 and 102 may also include desktop computers, server computers, and virtual machines, as well as any other type of computing system, variation, or combination thereof. In some implementations, mobile devices 101 and 102 could comprise mobile devices capable of operating in a server-like fashion which, among other uses, could be utilized in a wireless mesh network.

Factory network 120 could comprise multiple network elements such as routers, gateways, telecommunication switches, servers, processing systems, or other communication equipment and systems for providing communication and data services. In some examples, factory network 120 could comprise wireless communication nodes, telephony switches, Internet routers, network gateways, computer systems, communication links, or some other type of communication equipment, including combinations thereof. Factory network 120 may also comprise optical networks, packet networks, wireless mesh networks (WMN), local area networks (LAN), metropolitan area networks (MAN), wide area networks (WAN), or other network topologies, equipment, or systems, including combinations thereof. Factory network 120 may be configured to communicate over metallic, wireless, or optical links. Factory network 120 may be configured to use time-division multiplexing (TDM), Internet Protocol (IP), Ethernet, optical networking, wireless protocols, communication signaling, peer-to-peer networking over Bluetooth, Bluetooth low energy, Wi-Fi Direct, near field communication (NFC), or some other communication format, including combinations thereof. In some examples, factory network 120 includes further access nodes and associated equipment for providing communication services to several computer systems across a large geographic region.

Application platform API server 135 may be representative of any computing apparatus, system, or systems on which the techniques disclosed herein or variations thereof may be suitably implemented. Application platform API server 135 comprises a processing system and communication transceiver. Application platform API server 135 may also include other components such as a router, server, data storage system, and power supply. Application platform API server 135 may reside in a single device or may be distributed across multiple devices. Application platform API server 135 may be a discrete system or may be integrated within other systems, including other systems within communication system 100. Some examples of application platform API server 135 include desktop computers, server computers, cloud computing platforms, and virtual machines, as well as any other type of computing system, variation, or combination thereof. In some examples, application platform API server 135 could comprise a cloud-based service, network switch, router, switching system, packet gateway, authentication, authorization, and accounting (AAA) server, billing system, network gateway system, Internet access node, application server, database system, service node, firewall, or some other communication system, including combinations thereof.

Turning now to Figure 6, a block diagram that illustrates an industrial automation environment 600 in an exemplary implementation is shown. Industrial automation environment 600 provides an example of an industrial automation environment that may be utilized to implement the data snapshots processes disclosed herein, but other environments could also be used. Industrial automation environment 600 includes computing system 610, machine system 620, industrial controller 625, database system 630, and application integration platform 635. Computing system 610 provides an example of mobile devices 101, 102, 401, and 501, although mobile devices 101, 102, 401, and 501 could use alternative configurations. Application integration platform 635 provides an example of application platform API server 135, although server 135 could use alternative configurations. Machine system 620 and controller 625 are in communication over a communication link, controller 625 and database system 630 communicate over a communication link, database system 630 and application integration platform 635 communicate over a communication link, and application integration platform 635 and computing system 610 are in communication over a communication link. Note that there would typically be many more machine systems in most industrial automation environments, but the number of machine systems shown in Figure 6 has been restricted for clarity.

Industrial automation environment 600 comprises an automobile manufacturing factory, food processing plant, oil drilling operation, microprocessor fabrication facility, or some other type of industrial enterprise. Machine system 620 could comprise a sensor, drive, pump, filter, drill, motor, robot, fabrication machinery, mill, printer, or any other industrial automation equipment, including their associated control systems. A control system comprises, for example, industrial controller 625, which could include automation controllers, programmable logic controllers (PLCs), programmable automation controllers (PACs), or any other controllers used in automation control. Additionally, machine system 620 could comprise other industrial equipment, such as a brew kettle in a brewery, a reserve of coal or other resources, or any other element that may reside in an industrial automation environment 600.

Machine system 620 continually produces operational data over time. The operational data indicates the current status of machine system 620, such as parameters, pressure, temperature, speed, energy usage, operational equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 620 and/or controller 625 is capable of transferring the operational data over a communication link to database system 630, application integration platform 635, and computing system 610, typically via a communication network. Database system 630 could comprise a disk, tape, integrated circuit, server, or some other memory device. Database system 630 may reside in a single device or may be distributed among multiple memory devices.

Application integration platform 635 comprises a processing system and a communication transceiver. Application integration platform 635 may also include other components such as a router, server, data storage system, and power supply. Application integration platform 635 may reside in a single device or may be distributed across multiple devices. Application integration platform 635 may be a discrete system or may be integrated within other systems, including other systems within industrial automation environment 600. In some examples, application integration platform 635 could comprise a FactoryTalk® VantagePoint server system provided by Rockwell Automation, Inc.

The communication links over which data is exchanged between machine system 620, industrial controller 625, database system 630, application integration platform 635, and communication interface 608 of computing system 610 could use metal, air, space, optical fiber such as glass or plastic, or some other material as the transport medium, including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 610 may be representative of any computing apparatus, system, or systems on which the data snapshots processes disclosed herein or variations thereof may be suitably implemented. Computing system 610 provides an example of a computing system that could be used as a either a server or a client device in some implementations, although such devices could have alternative configurations. Examples of computing system 610 include mobile computing devices, such as cell phones, tablet computers, laptop computers, notebook computers, and gaming devices, as well as any other type of mobile computing devices and any combination or variation thereof. Examples of computing system 610 also include desktop computers, server computers, and virtual machines, as well as any other type of computing system, variation, or combination thereof. In some implementations, computing system 610 could comprise a mobile device capable of operating in a server-like fashion which, among other uses, could be utilized in a wireless mesh network.

Computing system 610 includes processing system 601, storage system 603, software 605, communication interface 608, and user interface 609. Processing system 601 is operatively coupled with storage system 603, communication interface 608, and user interface 609. Processing system 601 loads and executes software 605 from storage system 603. Software 605 includes application 606 and operating system 607. Application 606 may include data snapshot process 200 in some examples, as indicated by the dashed line in Figure 6. When executed by computing system 610 in general, and processing system 601 in particular, software 605 directs computing system 610 to operate as described herein for data snapshot process 200 or variations thereof. In this example, user interface 609 includes display system 611, which itself may be part of a touch screen that also accepts user inputs via touches on its surface. Computing system 610 may optionally include additional devices, features, or functionality not discussed here for purposes of brevity.

Turning now to Figure 7, a block diagram is shown that illustrates computing system 700 in an exemplary implementation. Computing system 700 provides an example of mobile devices 101, 102, 401, 501, or any computing system that may be used to execute data snapshot process 200 or variations thereof, although such devices and systems could use alternative configurations. Computing system 700 includes processing system 701, storage system 703, software 705, communication interface 707, and user interface 709. User interface 709 comprises display system 708. Software 705 includes application 706 which itself includes data snapshot process 200. Data snapshot process 200 may optionally be implemented separately from application 706, as indicated by the dashed line in Figure 7.

Computing system 700 may be representative of any computing apparatus, system, or systems on which application 706 and data snapshot process 200 or variations thereof may be suitably implemented. Examples of computing system 700 include mobile computing devices, such as cell phones, tablet computers, laptop computers, notebook computers, and gaming devices, as well as any other type of mobile computing devices and any combination or variation thereof. Note that the features and functionality of computing system 700 may apply as well to desktop computers, server computers, and virtual machines, as well as any other type of computing system, variation, or combination thereof.

Computing system 700 includes processing system 701, storage system 703, software 705, communication interface 707, and user interface 709. Processing system 701 is operatively coupled with storage system 703, communication interface 707, and user interface 709. Processing system 701 loads and executes software 705 from storage system 703. When executed by computing system 700 in general, and processing system 701 in particular, software 705 directs computing system 700 to operate as described herein for data snapshot process 200 or variations thereof. Computing system 700 may optionally include additional devices, features, or functionality not discussed herein for purposes of brevity.

Referring still to Figure 7, processing system 701 may comprise a microprocessor and other circuitry that retrieves and executes software 705 from storage system 703. Processing system 701 may be implemented within a single processing device but may also be distributed across multiple processing devices or sub-systems that cooperate in executing program instructions. Examples of processing system 701 include general purpose central processing units, application specific processors, and logic devices, as well as any other type of processing device, combinations, or variations thereof.

Storage system 703 may comprise any computer-readable storage media capable of storing software 705 and readable by processing system 701. Storage system 703 may include volatile and nonvolatile, removable and non-removable media implemented in any method or technology for storage of information, such as computer readable instructions, data structures, program modules, or other data. Storage system 703 may be implemented as a single storage device but may also be implemented across multiple storage devices or sub-systems co-located or distributed relative to each other. Storage system 703 may comprise additional elements, such as a controller, capable of communicating with processing system 701. Examples of storage media include random-access memory, read-only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the computer-readable storage media a propagated signal.

In operation, in conjunction with user interface 709, processing system 701 loads and executes portions of software 705, such as data snapshot process 200, to render a graphical user interface for application 706 for display by display system 708 of user interface 709. Software 705 may be implemented in program instructions and among other functions may, when executed by computing system 700 in general or processing system 701 in particular, direct computing system 700 or processing system 701 to receive device data generated by at least one industrial device operating in an industrial automation environment. Software 705 may further direct computing system 700 or processing system 701 to present a visualization of the device data for display by computing system 700. Software 705 may further direct computing system 700 or processing system 701 to receive a selection by a user of computing system 700 of at least a portion of the device data to capture as a data snapshot. Finally, software 705 may direct computing system 700 or processing system 701 to capture the data snapshot and share the data snapshot with at least a second user.

Software 705 may include additional processes, programs, or components, such as operating system software or other application software. Examples of operating systems include Windows®, iOS®, and Android®, as well as any other suitable operating system. Software 705 may also comprise firmware or some other form of machine-readable processing instructions executable by processing system 701.

In general, software 705 may, when loaded into processing system 701 and executed, transform computing system 700 overall from a general-purpose computing system into a special-purpose computing system customized to facilitate data snapshots for an application associated with an industrial automation environment as described herein for each implementation. For example, encoding software 705 on storage system 703 may transform the physical structure of storage system 703. The specific transformation of the physical structure may depend on various factors in different implementations of this description. Examples of such factors may include, but are not limited to the technology used to implement the storage media of storage system 703 and whether the computer-storage media are characterized as primary or secondary storage.

In some examples, if the computer-storage media are implemented as semiconductor-based memory, software 705 may transform the physical state of the semiconductor memory when the program is encoded therein. For example, software 705 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

It should be understood that computing system 700 is generally intended to represent a computing system with which software 705 is deployed and executed in order to implement application 706 and/or data snapshot process 200 (and variations thereof). However, computing system 700 may also represent any computing system on which software 705 may be staged and from where software 705 may be distributed, transported, downloaded, or otherwise provided to yet another computing system for deployment and execution, or yet additional distribution. For example, computing system 700 could be configured to deploy software 705 over the internet to one or more client computing systems for execution thereon, such as in a cloud-based deployment scenario.

Communication interface 707 may include communication connections and devices that allow for communication between computing system 700 and other computing systems (not shown) or services, over a communication network 711 or collection of networks. In some implementations, communication interface 707 receives dynamic data 721 over communication network 711. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 709 may include a voice input device, a touch input device for receiving a gesture from a user, a motion input device for detecting non-touch gestures and other motions by a user, and other comparable input devices and associated processing elements capable of receiving user input from a user. Output devices such as display system 708, speakers, haptic devices, and other types of output devices may also be included in user interface 709. The aforementioned user input devices are well known in the art and need not be discussed at length here. User interface 709 may also include associated user interface software executable by processing system 701 in support of the various user input and output devices discussed above. Separately or in conjunction with each other and other hardware and software elements, the user interface software and devices may provide a graphical user interface, a natural user interface, or any other kind of user interface.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims and their equivalents.

## Claims

1. One or more computer-readable storage media having program instructions stored thereon to facilitate data snapshots for an application associated with an industrial automation environment, wherein the program instructions, when executed by a computing system, direct the computing system to at least:
receive device data generated by at least one industrial device operating in the industrial automation environment;
present a visualization of the device data for display by the computing system;
receive a selection by a user of the computing system of at least a portion of the device data to capture as a data snapshot; and
capture the data snapshot and share the data snapshot with at least a second user.

2. The one or more computer-readable storage media of claim 1 wherein the program instructions direct the computing system to share the data snapshot with at least the second user by directing the computing system to at least one of:
transfer the data snapshot for delivery to a second computing system operated by the second user; and
post the data snapshot to a team board accessible by the second user.

3. The one or more computer-readable storage media of claim 1 or 2 wherein the data snapshot shared with at least the second user enables the second user to interact with at least the portion of the device data captured as the data snapshot.

4. The one or more computer-readable storage media of claim 3 wherein the data snapshot shared with at least the second user enables the second user to interact with at least the portion of the device data captured as the data snapshot by enabling the second user to perform data analytics functions on at least the portion of the device data captured as the data snapshot.

5. The one or more computer-readable storage media of one of claims 1 to 4 wherein at least one of:
the second user with whom the data snapshot is shared does not have access to at least the one industrial device from which the device data is received; and
the program instructions direct the computing system to capture the data snapshot and share the data snapshot with at least the second user by directing the computing system to store the data snapshot locally and automatically synchronize the data snapshot with at least the second user.

6. A method to facilitate data snapshots for an application associated with an industrial automation environment, the method comprising:
receiving device data generated by at least one industrial device operating in the industrial automation environment;
presenting a visualization of the device data for display by a computing system;
receiving a selection by a user of the computing system of at least a portion of the device data to capture as a data snapshot; and
capturing the data snapshot and sharing the data snapshot with at least a second user.

7. The method of claim 6 wherein sharing the data snapshot with at least the second user comprises at least one of:
transferring the data snapshot for delivery to a second computing system operated by the second user; and
posting the data snapshot to a team board accessible by the second user.

8. The method of claim 6 or 7 wherein the data snapshot shared with at least the second user enables the second user to interact with at least the portion of the device data captured as the data snapshot.

9. The method of claim 8 wherein the data snapshot shared with at least the second user enables the second user to interact with at least the portion of the device data captured as the data snapshot by enabling the second user to perform data analytics functions on at least the portion of the device data captured as the data snapshot.

10. The method of one of claims 6 to 9 wherein at least one of:
the second user with whom the data snapshot is shared does not have access to at least the one industrial device from which the device data is received; and
capturing the data snapshot and sharing the data snapshot with at least the second user comprises storing the data snapshot locally and automatically synchronizing the data snapshot with at least the second user.

11. An apparatus to facilitate data snapshots for an application associated with an industrial automation environment, the apparatus comprising:
one or more computer-readable storage media; and
program instructions stored on the one or more computer-readable storage media that, when executed by a processing system, direct the processing system to at least:
receive device data generated by at least one industrial device operating in the industrial automation environment;
present a visualization of the device data for display by a computing system;
receive a selection by a user of the computing system of at least a portion of the device data to capture as a data snapshot; and
capture the data snapshot and share the data snapshot with at least a second user.

12. The apparatus of claim 11 wherein the program instructions direct the processing system to share the data snapshot with at least the second user by at least one of:
directing the processing system to transfer the data snapshot for delivery to a second computing system operated by the second user; and
directing the processing system to post the data snapshot to a team board accessible by the second user.

13. The apparatus of claim 11 or 12 wherein the data snapshot shared with at least the second user enables the second user to interact with at least the portion of the device data captured as the data snapshot.

14. The apparatus of claim 13 wherein the data snapshot shared with at least the second user enables the second user to interact with at least the portion of the device data captured as the data snapshot by enabling the second user to perform data analytics functions on at least the portion of the device data captured as the data snapshot.

15. The apparatus of one of claims 11 to 14 wherein the second user with whom the data snapshot is shared does not have access to at least the one industrial device from which the device data is received.
